# EUROPEAN PATENT APPLICATION

(11) **EP 1 401 185 A1**
(43) Date of publication of application: **24.03.2004**
(21) Application number: 03021324.3
(22) Date of filing: 19.09.2003
(51) Int. Cl.: H04M 19/04

(54) **Method for giving notice of an incoming call through a specific vibration pattern in a mobile communication terminal**

(30) Priority: 19.09.2002 KR 2002057354
(71) Applicant: SAMSUNG ELECTRONICS CO., LTD., Suwon-City, Kyungki-do (KR)
(72) Inventor: Yu, Hyung-Seok, Paldal-gu Suwon-city Kyungki-do (KR)
(74) Representative: Grünecker, Kinkeldey, Stockmair & Schwanhäusser Anwaltssozietät

(57) **Abstract**

A method for giving notice of incoming call through vibration of a mobile communication terminal, and more particularly a method for giving notice of an incoming call through various vibration patterns. The method configures various vibration patterns according to a user's selection, sets the vibration patterns in a basic or particular incoming call notification mode of the mobile communication terminal, and generates vibration based on a set vibration pattern in the basic incoming call notification mode or generates vibration based on a particular vibration pattern mapped to a particular caller telephone number set in the particular incoming call notification mode when the incoming call is received.

## Description

The present invention relates to a method for giving notice of an incoming call in a mobile communication terminal, and more particularly to a method for giving notice of an incoming call through various vibration patterns.

Conventionally, as a method for giving notice of an incoming call, a mobile communication terminal generates a ring tone, melody, or vibration. In a method for generating the ring tone and melody, the mobile communication terminal generates a predetermined audible indication upon receiving the incoming call. Moreover, in a method for generating the vibration, the mobile communication terminal generates the vibration by driving a vibration motor when the incoming call is received.

Because the vibration of the mobile communication terminal does not annoy those around a person carrying the mobile communication terminal in public places, for example, a movie theater, the terminal's vibration mode is used for giving notice of an incoming call in the public places. According to a vibration on/off setting, the mobile communication terminal generates vibration based on a fixed vibration pattern.

As mobile communication terminals are widely used, various supplementary functions are provided to terminal users. One of the supplementary functions, a caller ID service, provides a telephone number of a caller to a mobile communication terminal of a called party. Through the caller ID service, the mobile communication terminal of the called party can display the caller's telephone number received so that the called party can identify the caller of an incoming call. Moreover, the mobile communication terminal can seta sound for particular incoming call notification so that the sound can be mapped to a telephone number previously stored by the user. Thus, the mobile communication terminal can generate the sound for particular incoming call notification according to a received telephone number of a caller. Therefore, the user can identify the caller of the incoming call through the mobile communication terminal without a special operation.

However, when the conventional mobile communication terminal gives notice of the incoming call by the vibration, a special operation is needed for identifying the caller because a vibration pattern is fixed. In particular, a visually handicapped person can never identify the caller of the incoming call before communicating with the caller.

It is the object of the present invention to provide a method for giving notice of an incoming call by providing caller information through various vibration patterns.
This object is solved by the subject matters of the independent claims: Preferred embodiments are defmed by the dependent claims.

In accordance with an aspect of the present invention, the above and other objects are accomplished by a method for giving notice of an incoming call in a mobile communication terminal, comprising the steps of: a) configuring and storing a plurality of vibration patterns according to a user's input, the vibration patterns being made up of information associated with time periods for which vibration generation is maintained, time periods for which vibration generation stops, and intensity of vibration for each time period; b) setting a vibration pattern of the stored vibration patterns for a particular telephone number of previously stored telephone numbers in a particular incoming call notification mode; and c) when an incoming call is received from a caller, generating vibration based on the set vibration pattern if the caller's telephone number matches the particular telephone number.

The above features and other advantages of the present invention will be more clearly understood from the following detailed description taken in conjunction with the accompanying drawings, in which:
Fig. 1 is a block diagram illustrating a configuration of a mobile communication terminal in accordance with the present invention;
Fig. 2 is a flow chart illustrating a procedure of configuring a vibration pattern in accordance with an embodiment of the present invention;
Fig. 3 is a flow chart illustrating a procedure of setting a configured vibration pattern in accordance with an embodiment of the present invention;
Fig. 4 is a flow chart illustrating a procedure of setting a particular vibration pattern in accordance with an embodiment of the present invention;
Fig. 5 is a flow chart illustrating a procedure of giving notice of an incoming call in accordance with an embodiment of the present invention; and
Fig. 6 is a view illustrating vibration pattern graphs in accordance with an embodiment of the present invention.

Preferred embodiments of the present invention will be described in detail herein below with reference to the annexed drawings. In the following description, detailed descriptions of known functions and configurations incorporated herein will be omitted when it may make the subject matter of the present invention rather unclear.

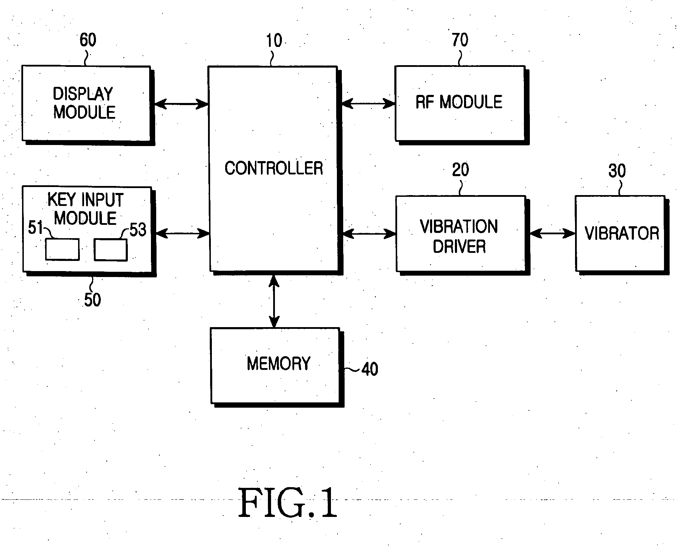

A configuration of a mobile communication terminal to which the present is applied will be described with reference to Fig. 1. Fig. 1 is a block diagram illustrating a configuration of a mobile communication terminal to which the present invention is applied. As illustrated in Fig. 1, the mobile communication terminal includes a controller 10, a vibration driver 20, a vibrator 30, a memory 40, a key input module 50, a display module 60, and a RF (Radio Frequency) module 70.

The controller 10 carries out an entire control operation of the mobile communication terminal. Under control of the controller 10, the RF module 70 carries out transmission and reception of voice data and control data, the display module 60 displays various messages; and the vibration driver 20 drives the vibrator 30 so that vibration can be generated. When the vibration is generated in response to an incoming call in accordance with the present invention, intensity of the vibration varies with time for which vibration is generated. The controller 10 controls voltage applied to the vibration driver 20 according to a vibration pattern stored in the memory 40. The vibration driver 20 drives the vibrator 30 on the basis of magnitude of the applied voltage so that the intensity of the vibration can be adjusted.

The key input module 60 includes a plurality of numeric keys and function keys and outputs key input data corresponding to a key pressed by the user. In accordance with the present invention, the key input module 60 includes an intensity adjustment key 51 and a time adjustment key 53, When a vibration pattern is configured, a function of adjusting intensity of vibration is allocated to the intensity adjustment key 51 and a function of adjusting a time period for which vibration generation is maintained and a time period for which vibration generation stops is allocated to the time adjustment key 53. In accordance with the present invention, numeric keys or direction keys can be employed as the intensity adjustment key 51 and the time adjustment key 53. In accordance with the embodiment of the present invention, volume adjustment keys positioned on a left side of the mobile communication terminal can be allocated as keys having a function of adjusting the intensity for vibration, and left and right direction leys can be allocated as keys having a function of adjusting each time period.

The memory 40 stores program data necessary for controlling an operation of the mobile communication terminal and stores data generated while the mobile communication terminal is controlled. In accordance with the present invention, the memory 40 additionally stores program data for a "vibration mode menu" and a plurality of vibration patterns. Moreover, the memory 40 stores a list of telephone numbers. Through the vibration mode menu, various vibration patterns can be configured according to the user's selection. Some of the configured vibration patterns can be set in a basic incoming call notification mode.

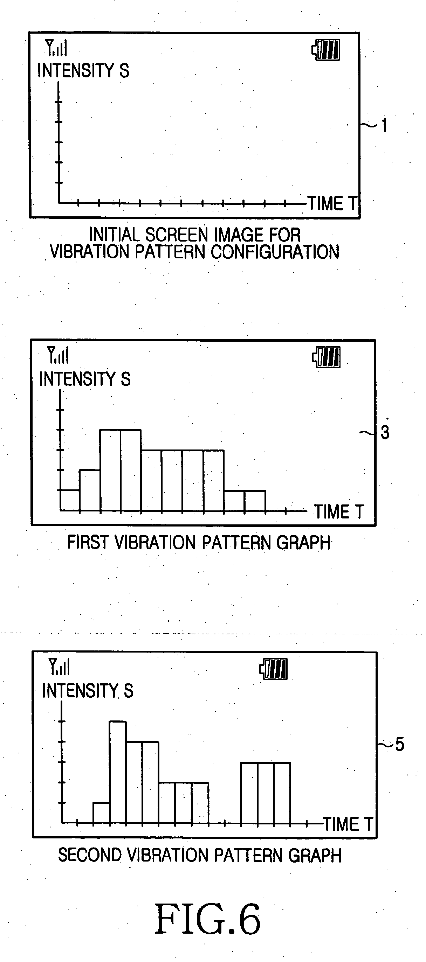

Alternatively, a particular telephone number can be mapped to a particular vibration pattern set in a particular incoming call notification mode, and the vibration of a corresponding vibration pattern can be generated according to a received telephone number of a caller when the mobile communication terminal receives an incoming call. The vibration mode menu as described above includes a vibration pattern configuration option and a vibration pattern setting sub-menu in accordance with the embodiment of the present invention. The vibration pattern is configured as a first vibration pattern graph 3 and a second vibration pattern graph 5 as illustrated in Fig. 6. The first and second vibration pattern graphs 3 and 5 show the generation of vibration and the intensity of vibration, varying with time.

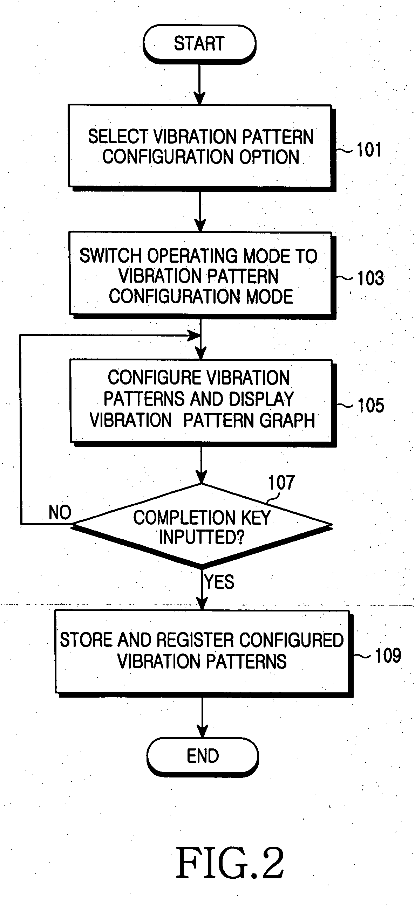

The controller 10 of the mobile communication terminal configures and stores the various vibration patterns in response to the user's selection. The controller 10 can set a vibration pattern of the stored vibration patterns in the basic incoming call notification mode. Alternatively, a particular telephone number can be mapped to a particular vibration pattern set in the particular incoming call notification mode, and the vibration of a corresponding vibration pattern can be generated according to a received telephone number of a caller when the mobile communication terminal receives an incoming call. This procedure will be described with reference to Figs. 2 to 6.

First, a procedure of configuring a vibration pattern will be described with reference to Figs. 2 and 6. Fig. 2 is a flow chart illustrating a procedure of configuring a vibration pattern in accordance with an embodiment of the present invention, and Fig. 6 is a view illustrating vibration pattern graphs in accordance with an embodiment of the present invention. Referring to Fig. 2, the controller 10 recognizes that a user has selected a vibration pattern configuration option in step 101. In step 103, the controller 10 switches an operating mode to a vibration pattern configuration mode. In step 105, the controller 10 commands the display module 60 to display an initial screen image 1 for a vibration pattern configuration graph as illustrated in Fig. 6. The initial screen image 1 for a vibration pattern configuration graph is a screen image for visually showing a vibration pattern to be configured by the user. The vibration pattern configuration graph includes a time axis T and an intensity axis S. The time axis T shows time periods for which vibration generation is maintained and time periods for which vibration generation stops. A time unit "t" of the time axis T depends upon mechanical characteristics of a vibration motor, a minimum time unit of a timer of an operating system of the mobile communication terminal, etc. An intensity unit "s" of the intensity axis S depends upon intensity of vibration capable of being recognized by the user.

After the controller 10 commands the display module 60 to display the initial screen image 1, the controller 10 configures a vibration pattern as the vibration pattern graph shown in Fig. 6 according to the intensity adjustment key 51 and the time adjustment key 53 inputted by the user and then commands the display module 60 to display a graph of the configured vibration pattern. For example, through the intensity adjustment key 51 and the time adjustment key 53, the user sets a first time period of "1t" and first intensity of "1s" of vibration to be generated for the first time period of "1t". The user then sets a second time period of ''It'' after the first time period and second intensity of "2s" of vibration to be generated for the second time period of "1t". The user then sets a third time period of "2t" after the second time period and third intensity of "4s" of vibration to be generated for the third time period of "2t". The user then sets a fourth time period of "4t" after the third time period and fourth intensity of "3 s" of vibration to be generated for the fourth time period of "4t". The user then sets a fifth time period of "2t" after the fourth time period and fifth intensity of "1s" of vibration to be generated for the fifth time period of "2t". If the user can input the vibration pattern in the mobile communication terminal by manipulating the keys as described above, the controller 10 of the mobile communication terminal sequentially configures the vibration pattern according to input keys and then commands the display module 60 to display a vibration pattern graph as the first vibration pattern graph 3 shown in Fig. 6. The user can arbitrarily configure the vibration pattern and configure the vibration pattern as the second vibration pattern graph 5 shown in Fig. 6. As described above, the vibration pattern graph is displayed so that the user can configure the vibration pattern.

Returning to Fig. 2, the controller 10 determines in step 107 whether a key for vibration pattern configuration completion is input and then proceeds to step 109 if the key for vibration pattern configuration completion is input. Otherwise, the controller 10 continues to configure the vibration pattern in the above step 105. In step 109, the controller 10 stores the configured vibration pattern and then registers it to a list of vibration patterns. At this time, a storage format of vibration patterns stored in the memory 40 is as follows.
{(Time Period, Vibration Intensity)}

A storage format of the second vibration pattern graph shown in Fig. 6 is as follows.
{(1, 1), (1, 5), (2, 4), (3, 2), (2, 0), (3, 3)}

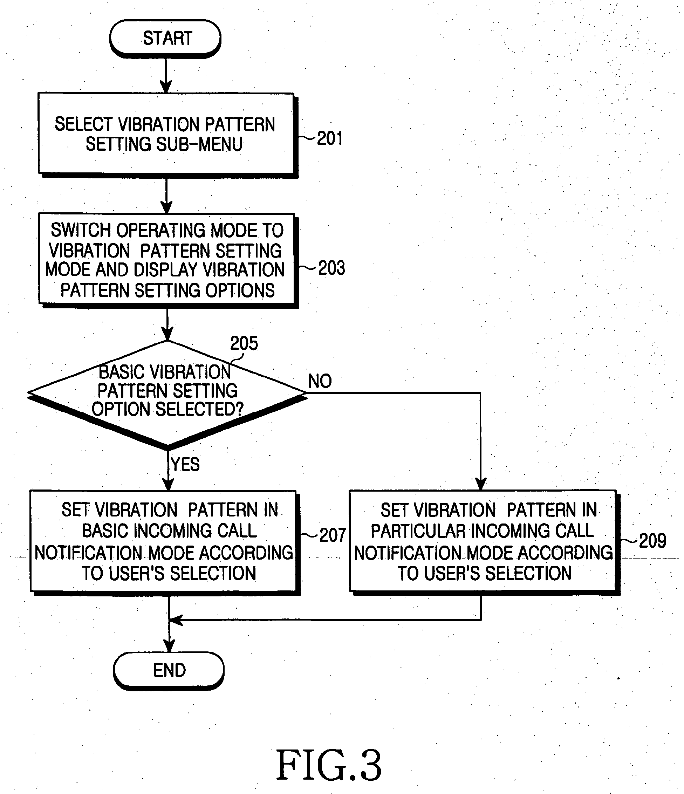

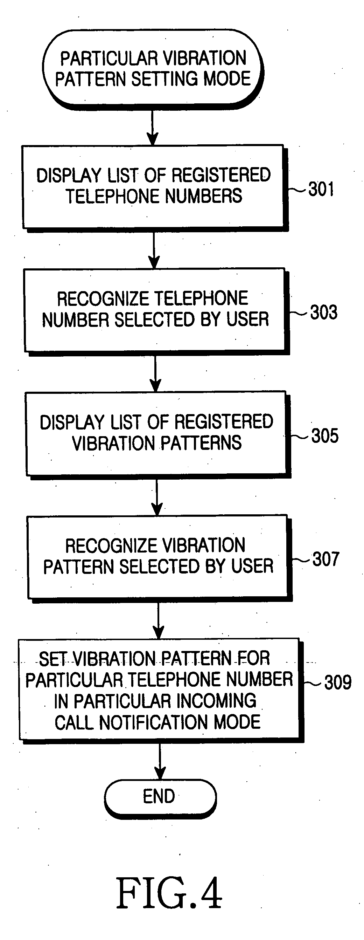

A procedure of setting the stored vibration patterns in an incoming call notification mode will be described with reference to Figs. 3 and 4. Fig. 3 is a flow chart illustrating a procedure of setting a configured vibration pattern in accordance with an embodiment of the present invention, and Fig. 4 is a flow chart illustrating a procedure of setting a particular vibration pattern in accordance With an embodiment of the present invention.

Referring to Fig. 3, in step 201 a vibration pattern setting sub-menu is selected by the user. In step 203, the controller 10 switches an operating mode to a vibration pattern setting mode and then commands the display module 60 to display a basic vibration pattern setting option and a particular vibration pattern setting option contained in the vibration pattern setting sub-menu. The basic vibration pattern setting option is for giving notice of an incoming call on the basis of a basic vibration pattern in the basic incoming call notification mode when the mobile communication terminal receives the incoming call. The particular vibration pattern setting option is for giving notice of an incoming call on the basis of a particular vibration pattern mapped to a particular caller telephone number in the particular incoming call notification mode when the mobile communication terminal receives the incoming call.

In step 205, the controller 10 determines whether the user selects the basic vibration pattern setting option. The controller 10 proceeds to step 207 if the user selects the basic vibration pattern setting option. Otherwise, the controller 10 proceeds to step 209. In step 207, the controller 10 sets, in the basic incoming call notification mode, a vibration pattern of the vibration patterns previously registered according to the user's selection.

If, in step 205, the user has selected the particular vibration pattern setting option, i.e., if the user does not select the basic vibration pattern setting option the controller 10 sets, in the particular incoming call notification mode, a vibration pattern of the vibration patterns previously registered for a particular caller telephone number according to the user's selection in step 209

A procedure of setting a particular vibration pattern for a particular telephone number in the particular incoming call notification mode in the above step 209 will be described in detail with reference to Fig. 4. Referring to Fig. 4, the controller 10 switches an operating mode to the particular vibration pattern setting mode, if the user selects the particular vibration pattern setting option at the above step 205 of Fig. 3. The controller 10 commands the display module 60 to display a list of telephone numbers previously registered at step 301. The controller 10 recognizes a telephone number selected by the user at the above step 303 and then proceeds to step 305. In step 305, the controller 10 commands the display module 60 to display a list of registered vibration patterns. In step 307, the controller 10 recognizes a vibration pattern selected by the user. In step 309, the controller 10 sets or maps the vibration pattern selected in the above step 307 and the telephone number selected in the above step 303 in the particular incoming call notification mode.

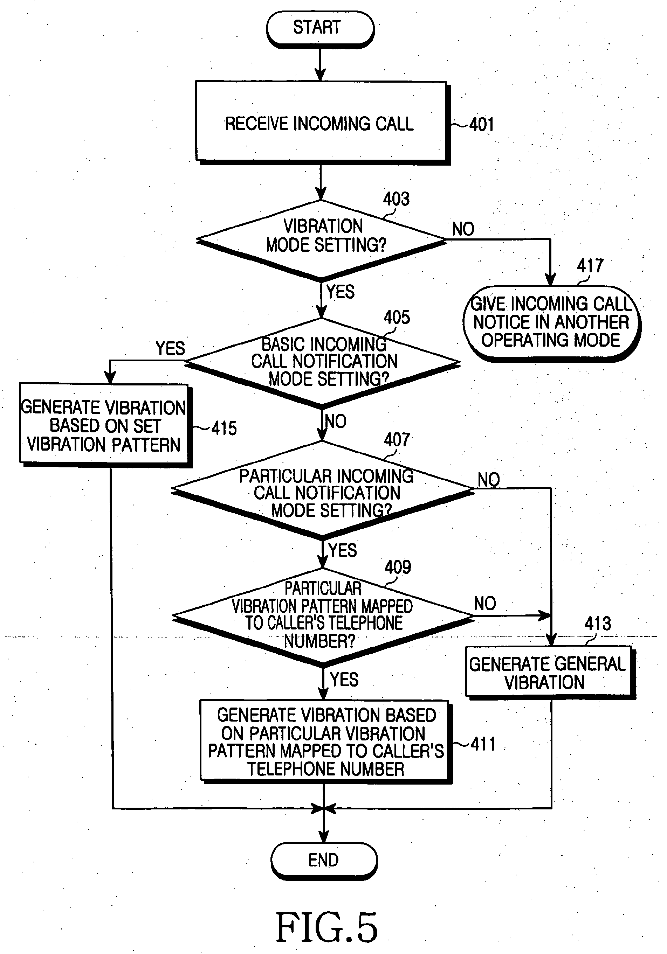

Hereinafter, a description will be given of an operation of the controller 10 when the incoming call is received after an incoming call notification mode is set through the above-described procedure with reference to Fig. 5. Fig. 5 is a flow chart illustrating a procedure of giving notice of an incoming call in accordance with an embodiment of the present invention. After an incoming call is received in step 401, the controller 10 proceeds to step 403. In step 403, the controller 10 determines whether an operating mode of the mobile communication terminal is currently a vibration mode. If the operating mode of the mobile communication terminal is currently the vibration mode, the controller 10 proceeds to step 405. If the operating mode of the mobile communication terminal is not currently the vibration mode, the controller 10 proceeds to step 417. In step 417, the controller 10 gives notice of the incoming call according to another operating mode set by the user.

In step 405, the controller 10 determines whether the incoming call notification mode is a basic incoming call notification mode. If the basic incoming call notification mode is set, the controller 10 proceeds to step 407. If the basic incoming call notification mode is not set, the controller 10 proceeds to step 415: In step 415, the controller 10 controls the vibrator 30 through the vibration driver 20 so that the vibrator 30 can generate vibration based on the set vibration pattern for predetermined time periods until the user inputs a response to the vibration.

On the other hand, the controller 10 determines in the above step 407 whether the incoming call notification mode is a particular incoming call notification mode. If the particular incoming call notice is set, the controller 10 proceeds to step 409. If the particular incoming call notice is not set, the controller 10 proceeds to step 413. In step 413, the controller 10 controls the vibrator 30 through the vibration driver 20 so that the vibrator 30 can generate general vibration for a predetermined period of time until the user gives a response to the vibration.

In step 409, the controller 10 determines whether a telephone number of an incoming call matches a telephone number mapped to a particular vibration pattern. If a caller's telephone number of an incoming call matches a telephone number mapped to a particular vibration pattern, the controller 10 proceeds to step 411. If a caller's telephone number of an incoming call does not match a telephone number mapped to a particular vibration pattern, the controller 10 proceeds to step 413. In step 411, the controller 10 controls the vibrator 30 through the vibration driver 20 so that the vibrator 30 can generate vibration based on the particular vibration pattern mapped to the caller's telephone number for predetermined time periods until the user inputs a response to the vibration

As is apparent from the description above, the present invention provides a method for giving notice of an incoming call by generating vibrations of different vibration patterns based on a caller's telephone number when the mobile communication terminal receives the incoming call.

Although preferred embodiments of the present invention have been disclosed for illustrative purposes, those skilled in the art will appreciate that various modifications, additions, and substitutions are possible, without departing from the scope of the invention. Therefore, the present invention is not limited to the above-described embodiments, but the present invention is defined by the claims, which follow along with their full scope of equivalents.

## Claims

1. A method for giving notice of an incoming call in a mobile communication terminal, comprising the steps of:
setting a vibration pattern in an incoming call notification mode; and
when an incoming call is received, generating vibration based on the set vibration pattern.

2. The method as set forth in claim 1, wherein the vibration pattern is set for a particular telephone number of previously stored telephone numbers in a particular incoming call notification mode.

3. The method as set forth in claim 1 or 2, wherein the incoming call is received from a caller.

4. The method as set forth in claim 2 or 3, wherein the vibration is generated based on the set vibration pattern if a telephone number of the incoming call matches the particular telephone number.

5. The method as described in one of claims 1 to 4, further comprising configuring and storing a plurality of vibration patterns according to a user's input, the plurality of vibration patterns including information associated with time periods for which vibration generation is maintained, time periods for which vibration generation stops, and intensity of vibration for each time period.

6. The method as set forth in claim 5, wherein the plurality of vibration patterns are configured by inputs of an intensity adjustment key and a time adjustment key from a user.

7. The method as set forth in claim 6, wherein the intensity adjustment key and the time adjustment key are volume adjustment keys of the mobile communication terminal.

8. The method as set forth in claim 5 or 6, wherein the configuring and storing the plurality of vibration patterns according to a user's input comprises the steps of:
displaying a graph corresponding to information associated with time periods for which vibration generation is maintained, time periods for which vibration generation stops, and intensity of vibration for each time period, in response to the inputs of the intensity adjustment key and the time adjustment key from the user; and
storing a vibration pattern based on the displayed graph in response to a configuration completion command from the user.

9. The method as set forth in one of claims 5, 6 or 8, wherein the plurality of vibration patterns are displayed in form of a graph according to a user's request.

10. The method as set forth in one of claims 5, 6, 8 or 9, wherein the plurality of vibration patterns are displayed in text form according to a user's request.

11. A mobile communication terminal adapted to operate according to one of claims 1 to 10.
